# FASCICULE DE BREVET EUROPEEN

(11) **EP 0 593 335 B1**
(45) Date de publication et mention de la délivrance du brevet: **07.05.1997**
(21) Numéro de dépôt: 93402451.4
(22) Date de dépôt: 06.10.1993
(51) Int. Cl.: G02B 6/42, G02B 7/02

(54) **Composant de couplage optique**
Bauteil zur optischen Kopplung
Optical coupling component

(30) Priorité: 13.10.1992 FR 9212207
(43) Date de publication de la demande: 20.04.1994
(73) Titulaire: FRAMATOME CONNECTORS INTERNATIONAL S.A., 92400 Courbevoie (FR)
(72) Inventeur: Crosnier, Jean-Jacques, F-92260 Fontenay aux Roses (FR); Gazelot, Yves, F-77170 Brie Conte Robert (FR); Deletoille, Didier, F-92110 Clichy (FR)
(74) Mandataire: Keib, Gérard

(56) Documents cités:
- EP-A- 0 100 379
- EP-A- 0 191 328
- DE-A- 3 822 429
- DE-A- 4 022 076
- US-A- 3 950 075
- US-A- 5 046 798

## Description

L'invention concerne un composant de couplage optique.

Par "composant de couplage optique", ou plus simplement "coupleur", on entendra de la façon la plus générale un composant comportant une face d'entrée recevant un faisceau lumineux et/ou une face de sortie émettant un faisceau lumineux, et au moins une lentille focalisant le faisceau lumineux en un plan image.

Ce composant peut être de diverses natures, notamment :
- coupleur actif électrooptique, à savoir coupleur actif comportant par exemple un composant électronique actif photoémissif ou photorécepteur dont la surface sensible est située au niveau du plan de focalisation de la lentille ; le composant possède alors une entrée optique et une sortie électrique, ou vice versa,
- photocoupleur, c'est-à-dire association d'un coupleur à composant photoémetteur à un coupleur à composant photorécepteur, le composant résultant ayant une entrée électrique et une sortie électrique, entrée et sortie étant isolées galvaniquement du fait de la double transformation électrique/optique puis optique/électrique.
- coupleur passif, par exemple une jonction de fibre optique, sous ses diverses formes : connecteur (avec une terminaison de fibre équipée), raccord (avec deux terminaisons de fibre équipées), embase, traversée (constituée de deux embases mises dos à dos), etc.
- coupleur actif non électrooptique : par exemple un coupleur de chaîne pyrotechnique assurant la focalisation d'une énergie lumineuse produite par une impulsion laser transmise le long d'une fibre optique sur un explosif primaire disposé au niveau du plan de focalisation.

Les applications particulières qui vont être décrites ou évoquées par la suite ne sont donc nullement limitatives, le concept de l'invention pouvant s'appliquer, de façon générale, à une très grande variété de composants de couplage optique.L'un des buts de l'invention est de réaliser un tel coupleur par des moyens faciles à mettre en oeuvre sur le plan industriel, avec une très grande précision de réalisation et une fiabilité élevée en dépit d'un coût de fabrication très réduit.

Plus précisément, le but de l'invention est de réaliser un tel coupleur qui présente une excellente résistance à des pressions élevées, et même très élevées. Dans le cas particulier d'un coupleur de chaîne pyrotechnique, il peut être ainsi souhaitable que le coupleur puisse résister à une pression de type déflagration supérieure à 1 MPa ; mais il existe bien entendu des cas où, sans qu'il soit nécessaire que le composant résiste à des pressions aussi extrêmes, il doive présenter une bonne herméticité, typiquement à des pressions de quelques bars, avec une parfaite fiabilité et l'assurance d'une bonne tenue dans le temps.

Un coupleur optique est par exemple décrit dans le DE-A-39 32 579, qui concerne plus précisément un composant électrooptique permettant de coupler une diode laser à une fibre optique, avec un système de focalisation comportant une bille de verre. Toutefois, dans ce composant, l'étanchéité du coupleur est obtenue par soudure périphérique des pièces du boîtier contenant la bille et la diode laser : cette technique est classique, mais elle est lourde à mettre en oeuvre du point de vue industriel.

Par ailleurs, dans les coupleurs optiques connus la lentille (le plus souvent une bille, comme dans l'antériorité précitée) est généralement collée au corps du composant pour assurer son maintien. L'ensemble (bille collée, boîtier en plusieurs pièces, fermeture par soudage, etc.) donne une structure assez hétérogène, difficile et coûteuse à réaliser.

Le document DE-A-4 022 076 décrit un composant de couplage optique, comportant un corps tubulaire fermé à l'une de ses extrémités et dont l'autre extrémité constitue une extrémité d'entrée destinée à recevoir un faisceau lumineux et/ou une extrémité de sortie destinée à émettre un faisceau lumineux, et au moins une lentille emmanchée à force dans le corps tubulaire, le serrage de la lentille dans le corps assurant à lui seul le maintien mécanique de la lentille et l'étanchéité du volume intérieur du corps compris entre cette lentille et l'extrémité fermée du corps tubulaire, ladite lentille étant agencée de façon à focaliser le faisceau lumineux susceptible d'être reçu par l'extrémité sur une surface située dans ledit volume intérieur du corps tubulaire.

Le but de la présente invention est de permettre un meilleur maintien mécanique et une amélioration de l'étanchéité de la lentille par rapport au corps tubulaire.

Suivant l'invention, ce but est atteint du fait que la lentille est un matériau élastiquement déformable d'élasticité supérieure à celle du matériau du corps tubulaire, de façon à assurer par sa déformation élastique lesdites améliorations du maintien mécanique et de l'étanchéité.

Très avantageusement, le matériau de la lentille et celui du corps tubulaire sont choisis de manière à présenter des coefficients de dilatation essentiellement proches l'un de l'autre sur toute la plage de températures d'utilisation du composant.

De préférence, l'écart dimensionnel, procurant l'emmanchement à force, entre diamètre extérieur de lentille et diamètre intérieur d'alésage du corps tubulaire est d'environ 4 à 16 µm, pour des diamètres nominaux de lentille et de tube d'environ 2 à 5 mm et une température comprise entre 20 et 100°C.

La lentille peut être une lentille sphérique le coupleur peut alors, dans un mode de réalisation particulier, comporter en outre, à l'arrière de la lentille sphérique, une autre lentille sphérique, également emmanchée à force dans le corps tubulaire. La lentille peut également être, en variante, un barreau cylindrique à indice variable.

Par ailleurs, le corps tubulaire peut comporter, en partie arrière de la lentille, un épaulement de sécurité contre lequel porte une surface non optiquement active de cette lentille.

D'autres avantages et caractéristiques de l'invention apparaîtront à la lecture de la description détaillée ci-dessous d'un exemple de réalisation, faite en référence aux dessins annexés.

La figure 1 représente, en coupe, un exemple de coupleur électro-optique actif mettant en oeuvre les enseignements de l'invention.

La figure 2 illustre la manière dont est effectué le montage du coupleur de la figure 1.

La figure 3 illustre une variante de réalisation comportant un système optique à double bille.

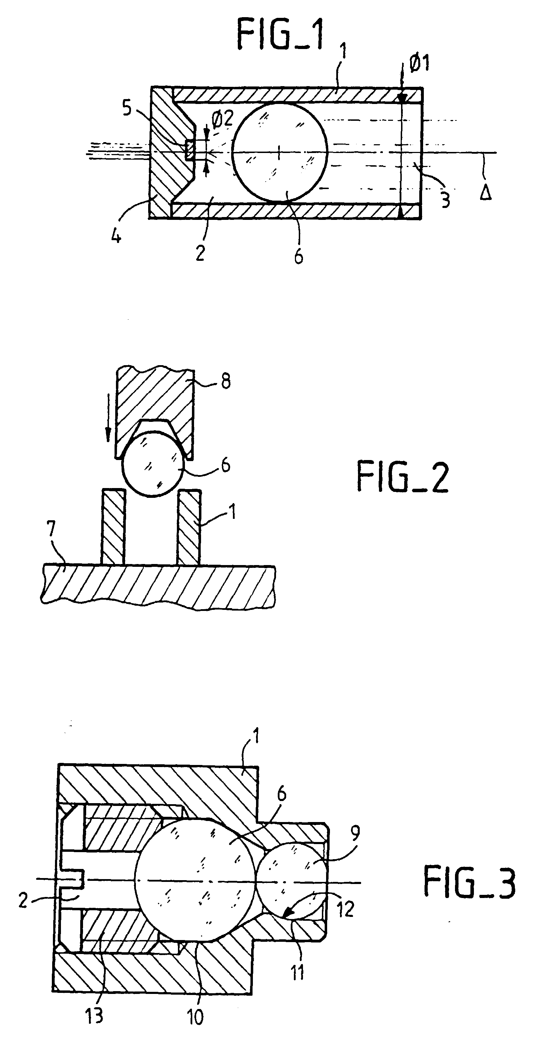

Sur la figure 1, on a illustré à titre d'exemple un composant photorécepteur selon l'invention, comprenant un corps tubulaire cylindrique 1 dont le volume intérieur 2 débouche vers l'extérieur par une région 3 formant face d'entrée, par exemple une ouverture cylindrique dont le diamètre intérieur ⌀1 correspond au diamètre extérieur d'une virole portant une extrémité de fibre optique, la virole (non représentée) étant alors introduite dans cette ouverture.

En partie arrière, le tube est fermé par un élément 4 comportant un composant électro-optique dont la surface sensible 5 est située dans l'axe Δ du corps tubulaire 1 et perpendiculairement à cette même direction Δ.

Le coupleur comporte enfin un élément optique ou lentille 6 permettant de focaliser le flux lumineux pénétrant par la face d'entrée 3 sur une surface de dimension ⌀2 plus réduite et dont le plan objet est situé, axialement, au niveau de la surface sensible 5 du composant électro-optique 4, permettant ainsi de focaliser ou collimater le faisceau sur le composant afin de maximiser l'efficacité de conversion.

Bien entendu, on pourrait, en gardant la même structure, prévoir à l'inverse un composant 4 photoémissif, tel qu'une diode laser ; dans ce cas la lentille 6 aurait pour fonction d'adapter le faisceau laser émis par la diode 4 au diamètre d'ouverture, plus élevé, de la fibre.

Dans l'exemple illustré, la lentille 6 est une bille sphérique, ce qui correspond à la configuration la plus couramment rencontrée. Cette forme n'est cependant pas limitative, et l'on pourrait également utiliser d'autres types de lentilles, notamment un barreau cylindrique à indice variable (barreau dit "SELFOC").

Dans une telle structure telle qu'elle était réalisée jusqu'à présent, la bille était généralement collée ou maintenue par des moyens mécaniques tels que bague ou manchon. Toutefois, dans ce cas, la bille ne pouvait en aucune façon participer à l'étanchéité du composant (c'est-à-dire à la protection du volume intérieur 2 du coupleur et donc de la face sensible 5 du composant électrooptique 4), de sorte qu'il était nécessaire de prévoir des moyens supplémentaires d'étanchéité, généralement par construction soudée, comme cela est décrit dans le DE-A-3 932 579 précité.

Au contraire, dans la présente invention, on fait en sorte que la bille (ou autre forme de lentille) assure d'elle même l'étanchéité, et ceci par le seul fait du contact périphérique avec la paroi intérieure du corps 1.

A cet effet, la bille est enfoncée à force dans le corps tubulaire, le matériau du corps et, surtout, celui de la bille étant choisis de manière que l'élasticité du verre assure de son seul fait le maintien mécanique et l'étanchéité de la bille dans le corps.

De préférence, on choisit pour le tube un acier inoxydable et pour la bille un matériau présentant les propriétés optiques et mécaniques voulues tel que verre, saphir ou PMMA. Dans ce cas, la déformation du fait de l'enfoncement résulte essentiellement de l'élasticité du matériau de la bille, qui se déforme notablement plus que l'acier, ce qui permet de conserver au composant des dimensions extérieures inchangées en dépit de l'enfoncement à force de la bille.

A titre purement illustratif, on peut ainsi utiliser, pour le matériau de la bille 6, un verre tel que le verre FBS E37-30 - 836-302 commercialisé par la société SOVIREL (filiale française de Corning Glass), qui peut être obtenu sous forme de billes offrant une très grande qualité dimensionnelle et géométrique et des paramètres optiques (tout particulièrement l'indice de réfraction) très bien maîtrisés ; l'utilisation d'autres matériaux optiques tels que saphir ou PMMA reste dans le cadre de l'invention, les ajustements étant maintenus dans les domaines élastiques des matériaux choisis. Pour le corps tubulaire 1, on peut utiliser la nuance d'acier inoxydable Z2 CN 18-10, qui peut être aisément usinée avec une excellente qualité d'alésage (précision, état de surface, coaxialité), typiquement avec une précision de l'ordre du micromètre.

On notera que la qualité dimensionnelle de la bille est un facteur essentiel car, outre sa bonne sphéricité, la bonne précision sur son diamètre nominal conditionne la reproductibilité de la force d'emmanchement, les contraintes mécaniques exercées sur la bille (et donc les phénomènes de photoélasticité, qu'il convient de parfaitement maîtriser), la tenue mécanique, l'étanchéité et le taux de rebut à la fabrication.

Le choix des matériaux respectifs de la bille et du corps tubulaire doit en outre tenir compte du fait que, le système étant composé de deux matériaux hétérogènes, son comportement en température va dépendre des coefficients de dilatation de chaque élément. Il est dont important de choisir des matériaux compatibles, c'est-à-dire évoluant sensiblement de la même manière, afin de préserver en toutes circonstances (c'est-à-dire sur toute la plage de température admissible et pour toutes les tolérances dimensionnelles possibles des pièces) un taux de serrage convenable, nécessaire pour assurer la tenue à la pression. La variation dimensionnelle du diamètre de l'alésage dépend également de l'épaisseur de la paroi du corps tubulaire. L'ensemble de ces paramètres est choisi de manière que le taux de serrage soit le moins possible affecté par la température.

Ainsi, par exemple pour un diamètre d'alésage du corps tubulaire compris entre 2 et 5 mm (avec une tolérance d'usinage de l'ordre de 1 µm), un diamètre de bille supérieur de 5 à 16 µm au diamètre de l'alésage permet d'obtenir en toute circonstance un ajustement avec serrage présentant une étanchéité suffisante mais n'engendrant pas de contrainte trop importante sur la bille, susceptible de générer des phénomènes de photoélasticité avec des effets sensibles. La tenue mécanique est également garantie.

Ces deux valeurs extrêmes de 5 et 16 µm correspondent à l'écart dimensionnel minimal et à l'écart dimensionnel maximal admissibles quelle que soit la température, typiquement sur la plage de température 20°C-100°C.

En pratique, la mise en oeuvre s'effectue, comme illustré schématiquement figure 2, par mise en place de la bille 6 dans le tube 1 au moyen d'une presse à main, le tube étant posé sur le bâti fixe 7 de la presse et la bille étant sollicitée par un poussoir 8 qui vient prendre appui sur les parties non actives de la bille afin de ne pas détériorer le comportement optique de celle-ci. Cette mise en oeuvre, simple et rapide, fait appel à un matériel traditionnel et ne nécessite pas de qualification particulière.

La figure 3 illustre une variante dans laquelle le système optique comporte deux lentilles sphériques constituées de deux billes 6 et 9 emmanchées chacune à force dans un alésage de diamètre approprié du corps 1. La cavité 2 peut notamment être remplie d'un explosif primaire de déclenchement d'une chaîne pyrotechnique. Un tel système optique permet de focaliser la lumière issue d'une fibre optique de 400/430µm d'ouverture, appliquée contre la bille d'entrée 9, sur la face de la bille de sortie 6 avec un grandissement de l'ordre de 0,6, soit un diamètre de tache de l'ordre de 240 µm. On peut par exemple choisir pour la bille 6 un diamètre de 2,5 mm et pour la bille 9 un diamètre de 1,55 mm, les deux billes étant en contact l'une avec l'autre (ce qui est plus simple d'un point de vue purement mécanique), avec un indice de verre de l'ordre de 1,8 assurant un bon compromis entre aberrations et pertes, tout en travaillant avec un matériau couramment disponible.

La bille 6, bien qu'elle ne soit pas directement soumise à des contraintes extérieures importantes, peut être retenue en place, outre le maintien par emmanchement sur sa région périphérique 10, par un écrou de maintien supplémentaire tel que 13, venant en appui sur une zone non active de la bille. La bille 9, pour sa part, étant directement soumise aux contraintes extérieures, on peut améliorer encore sa tenue mécanique (résultant de l'emmanchement à force par la région périphérique 11) par le biais d'un épaulement 12. Le système résultant présente alors une double barrière d'étanchéité, formée par les deux billes, ainsi qu'une excellente tenue mécanique.

## Revendications

1. Un composant de couplage optique, comportant un corps tubulaire (1) fermé à l'une de ses extrémités (4) et dont l'autre extrémité (3) constitue une extrémité d'entrée destinée à recevoir un faisceau lumineux et/ou une extrémité de sortie destinée à émettre un faisceau lumineux, et au moins une lentille (6) emmanchée à force dans le corps tubulaire, le serrage de la lentille dans le corps assurant à lui seul le maintien mécanique de la lentille et l'étanchéité du volume intérieur (2) du corps compris entre cette lentille et l'extrémité fermée du corps tubulaire, ladite lentille (6) étant agencée de façon à focaliser le faisceau lumineux susceptible d'être reçu par l'extrémité (3) sur une surface située dans ledit volume intérieur du corps tubulaire, caractérisé en ce que la lentille (6) est en un matériau élastiquement déformable, d'élasticité supérieure à celle du matériau du corps tubulaire (1), de façon à assurer, par sa déformation élastique résultant dudit emmanchement à force, ledit maintien mécanique dans ledit corps et ladite étanchéité dudit volume intérieur.

2. Le composant de la revendication 1, dans lequel le matériau de la lentille (6) et celui du corps tubulaire (1) sont choisis de manière à présenter des coefficients de dilatation essentiellement proches l'un de l'autre sur toute la plage de températures d'utilisation du composant.

3. Le composant de la revendication 1, dans lequel l'écart dimensionnel, procurant l'emmanchement à force, entre diamètre extérieur de lentille (6) et diamètre intérieur d'alésage du corps tubulaire (1) est d'environ 4 à 16 µm, pour des diamètres nominaux de lentille et de tube d'environ 2 à 5 mm et une température comprise entre 20 et 100°C.

4. Le composant de la revendication 1, dans lequel la lentille (6) est une lentille sphérique.

5. Le composant de la revendication 2, comportant en outre, à l'arrière de la lentille sphérique (6) une autre lentille sphérique (9), également emmanchée à force dans le corps tubulaire.

6. Le composant de la revendication 1, dans lequel la lentille est un barreau cylindrique à indice variable.

7. Le composant de la revendication 1, dans lequel le corps tubulaire (1) comporte, en partie arrière de la lentille, un épaulement de sécurité (12) contre lequel porte une surface non optiquement active de cette lentille.

## Patentansprüche

1. Bauteil zur optischen Kopplung mit einem rohrförmigen Körper (1), der an einem seiner Enden (4) geschlossen ist und dessen anderes Ende (3) ein zum Empfangen eines Lichtstrahls vorgesehenes Eintrittsende und/oder ein zum Entsenden eines Lichtstrahls vorgesehenes Austrittsende bildet, und wenigstens einer in den rohrförmigen Körper eingezwängten Linse (6), wobei die Klemmung der Linse im Körper allein den mechanischen Halt der Linse und die Dichtigkeit des zwischen dieser Linse und dem verschlossenen Ende des rohrförmigen Körpers liegenden Innenraums (2) des Körpers sicherstellt, wobei die Linse (6) eingerichtet ist, um den Lichtstrahl, der von dem Ende (3) empfangen werden kann, auf eine im Innern dieses Innenraumes des rohrförmigen Körpers liegende Oberfläche zu fokussieren,
**dadurch gekennzeichnet, daß**
die Linse (6) aus einem elastisch verformbaren Material mit höherer Elastizität als der des Materials des rohrförmigen Körpers (1) ist, um durch ihre elastische Verformung, die aus der Einzwängung resultiert, den mechanischen Halt in dem Körper und die Dichtigkeit des Innenraums sicherzustellen.

2. Bauteil nach Einspruch 1, bei dem das Material der Linse (6) und das des rohrförmigen Körpers (1) so gewählt sind, daß sie im gesamten Einsatztemperaturbereich des Bauteils nahe beieinanderliegende Wärmeausdehnungskoeffizienten aufweisen.

3. Bauteil nach Anspruch 1, bei dem die Maßabweichung, die die Einzwängung bewirkt, zwischen dem Außendurchmesser der Linse (6) und dem Innendurchmesser der Kammer des rohrförmigen Körpers (1) ca. 4 bis 16 µm beträgt, bei Nenndurchmessern der Linse und des Rohrs von ca. 2 bis 5 mm und einer Temperatur von zwischen 20 und 100 °C.

4. Bauteil nach Anspruch 1, bei dem die Linse (6) eine sphärische Linse ist.

5. Bauteil nach Anspruch 2, das zusätzlich hinter der sphärischen Linse (6) eine andere, ebenfalls in den rohrförmigen Körper eingezwängte sphärische Linse (9) aufweist.

6. Bauteil nach Anspruch 1, bei dem die Linse ein zylindrischer Stab mit variablem Index ist.

7. Bauteil nach Anspruch 1, bei dem der rohrförmige Körper (1) im Bereich hinter der Linse eine Sicherheitsschulter (12) aufweist, an dem eine optisch nicht aktive Oberfläche dieser Linse anliegt.

## Claims

1. An optical coupling component, including a tubular body (1) closed at one of its ends (4) and whose other end (3) constitutes an input end intended to receive a light beam and/or an output end intended to emit a light beam, and at least one lens (6) force-fitted into the tubular body, the gripping of the lens in the body by itself ensuring mechanical retention of the lens and leaktightness of the interior volume (2) of the body included between this lens and the closed end of the tubular body, the said lens (6) being arranged in such a way as to focus the light beam apt to be received by the end (3) onto a surface lying within the said interior volume of the tubular body, characterized in that the lens (6) is made of an elastically deformable material of greater elasticity than that of the material of the tubular body (1), so as to ensure, through its elastic deformation resulting from the said force-fit, the said mechanical retention in the said body and the said leaktightness of the said interior volume.

2. The component of Claim 1, in which the material of the lens (6) and that of the tubular body (1) are chosen in such a way as to exhibit expansion coefficients which are essentially close to one another throughout the range of temperatures of use of the component.

3. The component of Claim 1, in which the dimensional discrepancy, affording the force-fit, between exterior diameter of lens (6) and interior diameter of the bore of the tubular body (1) is around 4 to 16 µm, for nominal lens and tube diameters of around 2 to 5 mm and a temperature of between 20 and 100°C.

4. The component of Claim 1, in which the lens (6) is a spherical lens.

5. The component of Claim 2, furthermore including, at the rear of the spherical lens (6), another spherical lens (9) also force-fitted into the tubular body.

6. The component of Claim 1, in which the lens is a variable-index cylindrical bar.

7. The component of Claim 1, in which the tubular body (1) includes, at the rear part of the lens, a safety shoulder (12) against which there bears a non-optically active surface of this lens.
